# DEMANDE DE BREVET EUROPEEN

(11) **EP 1 255 052 A1**
(43) Date de publication de la demande: **06.11.2002**
(21) Numéro de dépôt: 02291062.4
(22) Date de dépôt: 26.04.2002
(51) Int. Cl.: F16C 19/18

(54) **Palier à roulements, notamment pour roues de véhicule automobile**

(30) Priorité: 27.04.2001 FR 0105700
(71) Demandeur: Renault s.a.s., 92100 Boulogne Billancourt (FR)
(72) Inventeur: Paul, Patrice, 92140 Clamart (FR)

(57) **Abrégé**

Palier (10) à roulement (13), notamment pour roues de véhicule, le palier (10) comportant un moyeu (12) tournant, d'axe D, supportant au moins une bague intérieure (14,15) du roulement (13), d'épaisseur radiale *E*_{*int*}, et un porte-fusée (11) fixe, supportant la bague extérieure (16) du roulement (13), d'épaisseur radiale *E*_{*ext*}, caractérisé en ce que l'épaisseur radiale *E*_{*ext*} de la bague extérieure (16) du roulement (13) est supérieure ou égale à 1.5 fois l'épaisseur radiale *E*_{*int*} de la bague intérieure (14,15) du roulement (13).

## Description

La présente invention concerne les paliers à roulements, notamment les paliers à roulement à billes, ou autres corps roulants, pour roues de véhicule automobile.

Elle concerne plus particulièrement les paliers à roulement comportant deux rangées de billes, ou d'autres corps roulants tels que par exemple des rouleaux coniques. Par la suite, pour simplifier l'expression, on utilisera essentiellement le terme « bille », étant entendu que, sauf indication contraire, cela devra être compris comme désignant tous corps roulants utilisables dans des roulements à deux rangées de corps roulants.

Dans des paliers à roulements de type connu, les bagues intérieures des roulements sont montées sur le moyeu de la roue, tandis que la bague extérieure est montée dans le porte-fusée. Chaque bague intérieure porte une piste de roulement intérieure pour l'une des deux rangées de billes.

Le moyeu de roue est habituellement en fonte ou en acier, les bagues intérieures, elles aussi en acier, sont emmanchées serrées sur celui-ci. Lorsque le porte-fusée est en fonte ou en acier, on vient le plus souvent emmancher directement la bague extérieure, également en acier, dans celui-ci.

Une tendance actuelle de l'industrie automobile est de chercher à alléger au maximum le véhicule. Pour cela, les constructeurs s'orientent vers le choix de matériaux plus légers. Ainsi, l'aluminium tend à remplacer, quand cela est envisageable, l'acier ou la fonte. Le porte-fusée est l'une des pièces que l'on souhaite vivement actuellement pouvoir réaliser en aluminium.

Toutefois la différence importante entre les coefficients de dilatation thermique entre le porte-fusée en aluminium, et le roulement, en acier présente des contraintes. En effet, un roulement en acier dont la bague extérieure est emmanchée dans le porte-fusée en aluminium peut, dans certains cas, subir une sur-contrainte excessive, ou bien au contraire présenter un jeu avec le porte-fusée, à cause des dilatations inégales entre les deux composants. Les performances du roulement se retrouvent dégradées. En particulier, la durée de vie du roulement s'en trouve amoindrie. En effet, celui-ci doit présenter, pour fonctionner correctement, une contrainte permanente et, de préférence, constante entre les deux bagues intérieures et la bague extérieure.

Une solution actuelle consiste à relier le roulement au porte-fusée au moyen d'une collerette, solidaire de la bague extérieure du roulement, et vissée sur le porte-fusée. Les inconvénients de cette solution sont qu'ils génèrent une hausse du coût de fabrication du roulement en raison de la quantité supplémentaire d'acier nécessaire pour la réalisation de la collerette, ainsi que l'exécution d'opérations d'usinage supplémentaires, par exemple entre les faces d'appui respectives de la collerette et du porte-fusée.

Une autre possibilité consiste à ajouter, lors de la conception du porte-fusée en aluminium, un insert en acier au corps du porte-fusée qui reçoit la bague extérieure du roulement. On se retrouve alors dans le cas du montage classique d'un roulement dans un porte-fusée en acier, pour lequel les caractéristiques des contraintes présentes entre le porte-fusée et le roulement sont connues de l'homme du métier. Le principal inconvénient vient, dans ce cas, du coût excessif de la réalisation du porte-fusée, étant donné la complexité de son procédé de réalisation, ainsi que d'une mauvaise connaissance, en l'état actuel, du vieillissement d'un porte-fusée hybride acier/alliage.

La présente invention vise l'obtention d'un palier à roulement de conception simple, permettant le montage d'un roulement en acier sur un porte-fusée en aluminium, dont les performances ne sont pas dégradées par rapport à celles d'un palier à roulement dans lequel le porte-fusée est en acier ou en fonte.

Dans ce but, elle propose un palier à roulement, notamment pour roue de véhicule, le palier comportant un moyeu tournant d'axe D supportant au moins une bague intérieure du roulement, d'épaisseur radiale *E*_{*int*}, et un porte-fusée fixe supportant la bague extérieure du roulement, d'épaisseur radiale *E*_{*ext*}*.* Le palier est caractérisé en ce que l'épaisseur radiale *E*_{*ext*} de la bague extérieure du roulement est supérieure ou égale à 1.5 fois l'épaisseur radiale *E*_{*int*} de la bague intérieure du roulement.

Selon une autre caractéristique de l'invention, le roulement présente, le moyeu étant non tournant, une contrainte résiduelle, provenant essentiellement de l'effort exercé par le moyeu sur la bague intérieure. Typiquement, la bague intérieure est montée emmanchée sur le moyeu. De préférence, le roulement comporte deux rangées de corps roulants, à chaque rangée de corps roulants étant associée une bague intérieure.

Selon une autre caractéristique de l'invention, la bague extérieure comporte des moyens élastiques qui tendent à la maintenir en butée contre le porte-fusée. Les moyens élastiques consistent en un anneau élastique monté sur une gorge réalisée sur la bague extérieure. La bague extérieure est maintenue en butée contre le porte-fusée par l'intermédiaire d'un jonc monté sur une gorge pratiquée sur la bague extérieure.

Selon une autre caractéristique de l'invention, la bague extérieure est en acier et le porte-fusée est en aluminium ou en alliage d'aluminium.

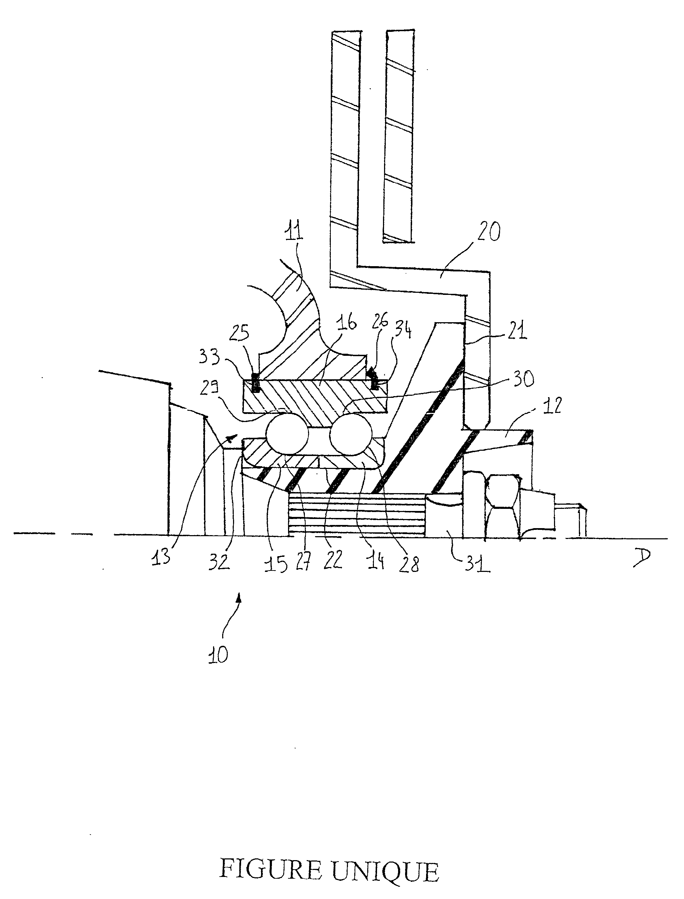

D'autres caractéristiques et avantages de l'invention apparaîtront à la lecture de la description qui va suivre en référence au dessin annexé dont la figure unique représente schématiquement une vue en coupe d'un palier à roulement selon l'invention.

Le palier 10 illustré sur la figure unique comporte un moyeu 12 tournant par rapport à un porte-fusée 11 fixe. Le moyeu 12 est monté sur un arbre 31, d'axe D, de façon connue en soi.

Le moyeu 12 comporte un flasque 21 conçu de manière à recevoir un disque de frein 20 et la jante de la roue, non représentée, qui peuvent être fixés sur le dit flasque 21 par des vis ou boulons passant dans des trous de fixation circonférentiellement répartis. Le moyeu 12 présente un logement 22 recevant les deux bagues intérieures 14,15 d'un roulement 13, comportant chacune une piste de roulement 27,28 pour une rangée de corps roulants tels que des billes, de manière connue en soi, pour constituer un roulement 13 à deux rangées de billes à contact oblique.

Les deux bagues intérieures 14,15 sont emmanchées sur le moyeu 12 avec un ajustement serré. Elles sont montées en butée axiale l'une contre l'autre, et viennent également en butée, d'une part contre une extrémité du logement 22 du moyeu 12, et d'autre part, contre un épaulement 32 réalisé sur l'arbre 31.

Chaque rangée de billes roule par ailleurs sur une piste de roulement extérieure 29,30 réalisée toutes deux sur une bague extérieure 16. La bague extérieure 16 présente une épaisseur radiale *E*_{*ext*},, qui correspond à la distance séparant le diamètre extérieur et intérieur de la bague extérieure, qui est égale ou supérieure à au moins 1.5 fois l'épaisseur radiale *E*_{*int*}, des bagues intérieures 14,15, correspondant à la distance séparant les diamètres extérieur et intérieur des bagues intérieures 14,15.

La bague extérieure 16 est montée dans un alésage 35 du porte-fusée 11 et se projette en saillie de part et d'autre de cet alésage 35. Elle comporte, sur sa paroi extérieure, deux gorges 33,34, situées chacune sur une extrémité opposée de la bague extérieure 16 dépassant de l'alésage 35. La première gorge 33 supporte un jonc 25, et la seconde gorge 34, un anneau flexible 26, qui exerce des efforts sur le flanc du porte-fusée 11 de façon à mettre en appui le jonc 25 contre le porte-fusée 11.

L'épaisseur *E*_{*ext*} confère à la bague extérieure 16 une inertie thermique suffisante pour en limiter les dilatations excessives étant donné le mode de fonctionnement habituel du palier à roulement 10.

La précharge du roulement 13 est obtenue uniquement par l'emmanchement des bagues intérieures 14,15 sur le moyeu 12 et par le serrage de celles-ci l'une contre l'autre. La bague extérieure 16 est emmanchée dans le porte-fusée 11 de façon à ce que le roulement 13 soit maintenu dans son logement 22 sans contrainte radiale lors du fonctionnement dit « à chaud » du palier de roulement 13, ce qui correspond pratiquement à des températures locales au niveau du roulement 13 de l'ordre de 60 à 120 degrés Celsius. Typiquement, la bague extérieure 16 est emmanchée sous une très légère contrainte dans le porte-fusée 11 pour éviter la prise de jeu entre la bague extérieure 16 et le porte-fusée 11 qui serait génératrice de bruit.

Le maintien axial du roulement 13 est assuré par le jonc 35 et la bague flexible 26.

La présente invention comporte de nombreux avantages. A la différence des assemblages traditionnels où le roulement est précontraint à la fois par le serrage lié à l'emmanchement de la bague extérieure dans le porte-fusée et le serrage lié à l'emmanchement des bagues intérieures sur le moyeu, le roulement du palier selon l'invention, est essentiellement précontraint par le serrage lié à l'emmanchement des bagues intérieures sur le moyeu. Ceci permet de mieux contrôler les variations de cette précontrainte qui sont, alors, essentiellement dues aux variations des côtes des bagues intérieures et du moyeu, et restent peu sensibles aux variations des côtes de la bague extérieure et de l'alésage du porte-fusée.

En outre, l'utilisation d'une bague extérieure massive permet de limiter les contraintes de matage de la surface extérieure de la bague extérieure en raison de son plus grand diamètre.

La présente invention n'est nullement limitée au mode de réalisation décrit et illustré qui n'a été donné qu'à titre d'exemple. Au contraire, l'invention comprend tous les équivalents techniques des moyens décrits ainsi que leurs combinaisons si celles-ci sont effectuées suivant son esprit.

Ainsi, le jonc participant au maintien axial du roulement peut être remplacé par un épaulement réalisé dans l'alésage recevant la bague extérieure, et contre lequel elle vient en appui sous l'action de l'anneau flexible.

## Revendications

1. Palier (10) à roulement (13), notamment pour roues de véhicule, le palier (10) comportant un moyeu (12) tournant, d'axe D, supportant au moins une bague intérieure (14,15) du roulement (13), d'épaisseur radiale *E*_{*int*}, et un porte-fusée (11) fixe, supportant la bague extérieure (16) du roulement (13), d'épaisseur radiale *E*_{*ext*}, **caractérisé en ce que** l'épaisseur radiale *E*_{*ext*} de la bague extérieure (16) du roulement (13) est supérieure ou égale à 1.5 fois l'épaisseur radiale *E*_{*int*} de la bague intérieure (14,15) du roulement (13).

2. Palier (10) à roulement (13) selon la revendication 1, **caractérisé en ce que** le roulement (13) présente, le moyeu (12) étant non tournant, une contrainte résiduelle, provenant essentiellement de l'effort exercé par le moyeu (12) sur la bague intérieure (14,15).

3. Palier (10) à roulement (13) selon les revendications 1 ou 2, **caractérisé en ce que** la bague intérieure (14,15) est montée emmanchée sur le moyeu (12).

4. Palier (10) à roulement (13) selon l'une des revendications 1 à 3, **caractérisé en ce que** la bague extérieure (16) comporte des moyens élastiques (26) qui tendent à la maintenir en butée contre le porte-fusée (11).

5. Palier (10) à roulement (13) selon la revendication 4, **caractérisé en ce que** les moyens élastiques (26) consistent en un anneau élastique (26) monté sur une gorge (34) réalisée sur la bague extérieure (16).

6. Palier (10) à roulement (13) selon les revendications 4 ou 5, **caractérisé en ce que** la bague extérieure (16) est maintenue en butée contre le porte-fusée (11) par l'intermédiaire d'un jonc (25) monté sur une gorge (33) réalisée sur la bague extérieure (16).

7. Palier (10) à roulement (13) selon l'une des revendications 1 à 6, **caractérisé en ce que** le roulement (13) comporte deux rangées de corps roulants, à chaque rangée de corps roulants étant associée une bague intérieure (14,15).

8. Palier (10) à roulement (13) selon l'une des revendications 1 à 7, **caractérisé en ce que** la bague extérieure (16) et le porte-fusée (11) présentent des coefficients de dilatation thermique différents.

9. Palier (10) à roulement (13) selon l'une des revendications 1 à 8, **caractérisé en ce que** la bague extérieure (16) est en acier.

10. Palier (10) à roulement (13) selon l'une des revendications 1 à 9, **caractérisé en ce que** le porte-fusée (11) est en aluminium ou en alliage d'aluminium.
